# EUROPEAN PATENT SPECIFICATION

(11) **EP 1 478 197 B1**
(45) Date of publication and mention of the grant of the patent: **08.03.2006**
(21) Application number: 03010597.7
(22) Date of filing: 12.05.2003
(51) Int. Cl.: H04Q 7/38

(54) **Method and apparatus for transmitting layers for scalable data services**
Verfahren und Vorrichtung zur Übertragung von Schichten für skalierbare Datendienste
Procédé et dispositif de transmission de couches pour les services évolutifs de données

(43) Date of publication of application: 17.11.2004
(73) Proprietor: MATSUSHITA ELECTRIC INDUSTRIAL CO., LTD., Kadoma-city, Osaka 571-8501 (JP)
(72) Inventor: Petrovic, Dragan, 64295 Darmstadt (DE); Seidel, Eiko, 64285 Darmstadt (DE); Golitschek Edler von Elbwart, Alexander, 64285 Darmstadt (DE); Suzuki, Hidetoshi, Yokosuka-shi, Kanagawa 239-0847 (JP)
(74) Representative: Grünecker, Kinkeldey, Stockmair & Schwanhäusser Anwaltssozietät

(56) References cited:
- EP-A- 0 892 571
- WO-A-01/65855
- WO-A-03/005761
- GB-A- 2 354 671
- GUSTAFSSON M ET AL: "Compressed Mode Techniques for Inter-Frequency Measurements in a Wide-band DS-CDMA System" WAVES OF THE YEAR 2000+ PIMRC. THE IEEE INTERNATIONAL SYMPOSIUM ON PERSONAL, INDOOR AND MOBILE RADIO COMMUNICATIONS. TECHNICAL PROGRAM, XX, XX, vol. 1, 1 September 1997 (1997-09-01), pages 231-235, XP002127494

## Description

The present invention relates to a communication method, a radio access network and a communication system performing the transmission of data of scalable data services.

The Third Generation Partnership Project (3GPP) specification group has defined the Universal Mobile Telecommunication Standard (UMTS) in recent years. Release 5 of March 2002 introduced advanced feature such as a multi-rate wideband voice codec, IP-based multimedia services (IMS) and high speed downlink packet access (HSDPA).

The UMTS network architecture defines a core network (CN) and a terrestrial radio access network (UTRAN). The UTRAN has been designed to efficiently handle voice and data as well as real-time and non-real-time services over the same air interface. Several radio interface modes have been defined in this framework. Essentially, the definition distinguishes between two modes of operation: frequency division duplex (UTRAN FDD) for operation in paired frequency bands and time division duplex (UTRAN TDD) for operation in unpaired frequency bands, allowing alternative chip rates and bandwidths to be implemented.

For example, the UTRAN FDD mode employs Wideband CDMA (W-CDMA) as an access technology. W-CDMA uses direct sequence CDMA and allows bit rates up to 384 kbit/s (2.048 Mbit/s in a pico cell). These high data rates on the wireless link facilitate the introduction of scalable multimedia services to UMTS. In this respect point-to-multipoint services or broadcast services are of interest especially in the field of video and audio streaming.

Point-to-multipoint services allow data from a single source entity to be transmitted to multiple endpoints. These services are expected to be used extensively over wireless networks and therefore public land mobile networks (PLMN) should to efficiently support them. In this respect, Multimedia Multicast / Broadcast Service (MBMS) is intended provide this capability for such broadcast/multicast services provided by the home environment and other value added service providers (VASP).

The MBMS is a unidirectional point-to-multipoint bearer service in which data is transmitted from a single source entity to multiple recipients. It is anticipated that other services will use these bearer capabilities. The 3GPP has defined two modes of operation for MBMS: the broadcast mode and the multicast mode. The main motivation for providing services in terms of multicast / broadcast transmissions is the efficient utilization of radio resources when transmitting the same content to several users simultaneously.

The multicast/broadcast mode is a unidirectional point-to-multipoint transmission of multimedia data (e.g. text, audio, picture, video) from a single source entity to all users in a multicast/broadcast service area. The multicast/broadcast mode is intended to efficiently use radio/network resources e.g. data is transmitted over a single logical channel. Data is transmitted in the multicastlbroadcast service area as defined by the network (Home environment). In the multicast mode the network may selectively transmit to cells within the multicast service area which contain members of a multicast group.

MBMS data transmission adapts to different radio access network (RAN) capabilities or different radio resource availability, e.g. by reducing the bitrate of the MBMS data. The selection and description of an appropriate mechanism is subject to MBMS stage 2.

The transmission of MBMS data is carried out on point-to-multipoint logical channel MTCH (MBMS Traffic Channel) while the transmission of MBMS control information is carried out on point-to-multipoint logical channel MCCH (MBMS Control Channel). If the only information to be transmitted on MBMS Control Channel is related to notifications, this channel could be called NCCH (Notification Control Channel). Depending on certain criteria (e.g. system load), these logical channels may be mapped on dedicated transport channels (DCH - Dedicated Channel) or common transport channels (e.g. FACH - Forward Access Channel).

Scalable data services, such as scalable MBMS, are based upon the assumption that the data to be transmitted can be separated into distinct layer data streams, also referred to as importance layers. Practically, those are categorized into a Base Layer and one or more Enhanced Layers. By definition, the Base Layer contains data that is required for the service (e.g. video streaming) to be received with a lowest acceptable quality and provides a basic quality of service of the MBMS data stream. The Enhanced Layer(s) contain(s) only supplementary data whose reception and subsequent processing improve the quality of service experienced by end users relative to the quality offered by the Base Layer.

In a radio network e.g. UMTS UTRAN, a service in the cell can be provided on several frequency carriers. These new cells, separated by different frequencies, usually have the same coverage and form a multi layered geographically collocated cell structure. Inter-frequency handovers, i.e. an inter-frequency cell changes are executed for the purpose of balancing the load between frequency carriers and is therefore possible to have a number of users on each frequency carrier. Inter-frequency handovers are controlled by RRC (Radio Resource Control) entities which are located in a radio network controller (RNC).

An inter-frequency cell change can be executed with or without inter-frequency measurements carried out by user equipment (UE) or mobile terminal. In the former case, the network first orders to UE to perform inter-frequency measurements. Finally the radio access network (RAN) makes decision whether to execute an inter-frequency handover or not based on measurement results or the decision is left to the UE.

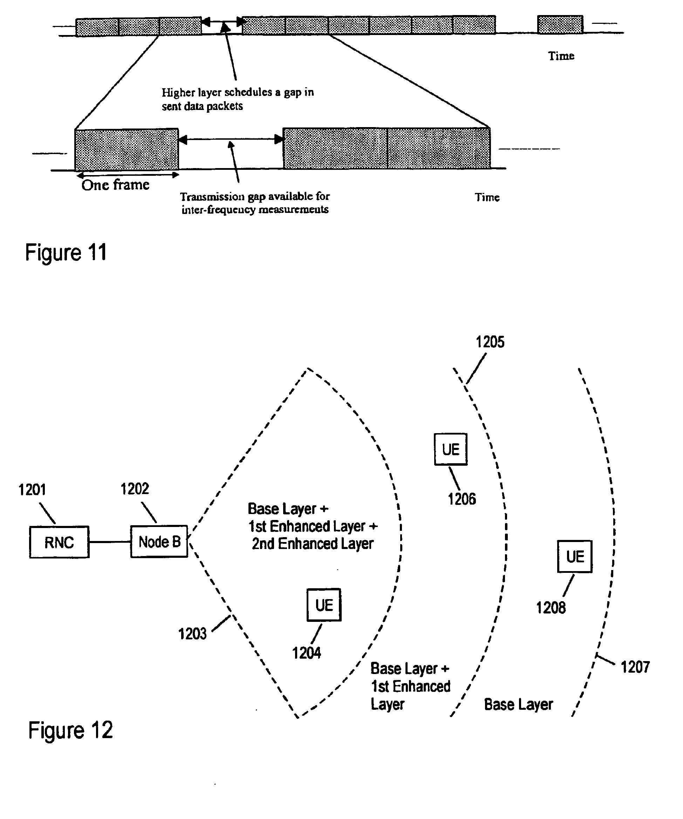

In Tdoc R2-022110 "Power Usage for MBMS" by Lucent Technologies (available from 3GPP), it has been shown that 66% of the sector total power has to be allocated to a single 64kbps MBMS if full cell coverage is required for data transmissions on a common transport channel, such as a FACH. An example of usage of scalable MBMS transmissions would be to relax the power requirements by transmitting only the Base Layer of the importance layers to those users which are located close to the cell edge and gradually increase the number of enhanced layers for users located closer to the radio access network's Node B transmitting the data. This technique is illustrated in Figure 12.

So far the scalability in MBMS has not been discussed in relevant standardization bodies of the 3GPP and it is not clear if it should be supported in the RAN. In further considerations it will be assumed that adequate knowledge to support scalable MBMS transmissions is available in the RAN. If scalability is supported in RAN, there could be more than one logical channel (MTCH) supporting transmissions of different importance layers. MBMS-specific function for handling of logical channels is currently located in medium access control MAC c/sh/m entity in RNC.

Compressed mode measurements (see for example 3GPP TS 25.215: "Physical layer - Measurements (FDD)" for more details) are usually executed when making measurements on other transmission frequencies in a CDMA system without a full dual receiver terminal. This mode can be considered as an example of how transmitted bits can be manipulated to enable a UE to carry out measurements without imposing significant additional requirements on the processing time.

The term "compressed mode" means that transmission and reception at the UE are halted for short time intervals in order to perform measurements on the other frequencies. In these intervals, gaps within frames received by the UE are introduced by the RAN to allow the UE to perform the measurements. Transmission gaps are created by compressing the data that should be transmitted in the time domain, i.e. within a time frame.

There are three ways of frame compression: First, increasing the available data rate by reducing the spreading factor. The decrease of spreading factor is often compensated by increasing transmission power in the frame. Second, reducing the data rate by puncturing on physical layer. Since puncturing processes some practical limits, this is limited to creating rather short transmission gaps. And third, lowering the data rate delivered to physical layer by the scheduling in higher layer.

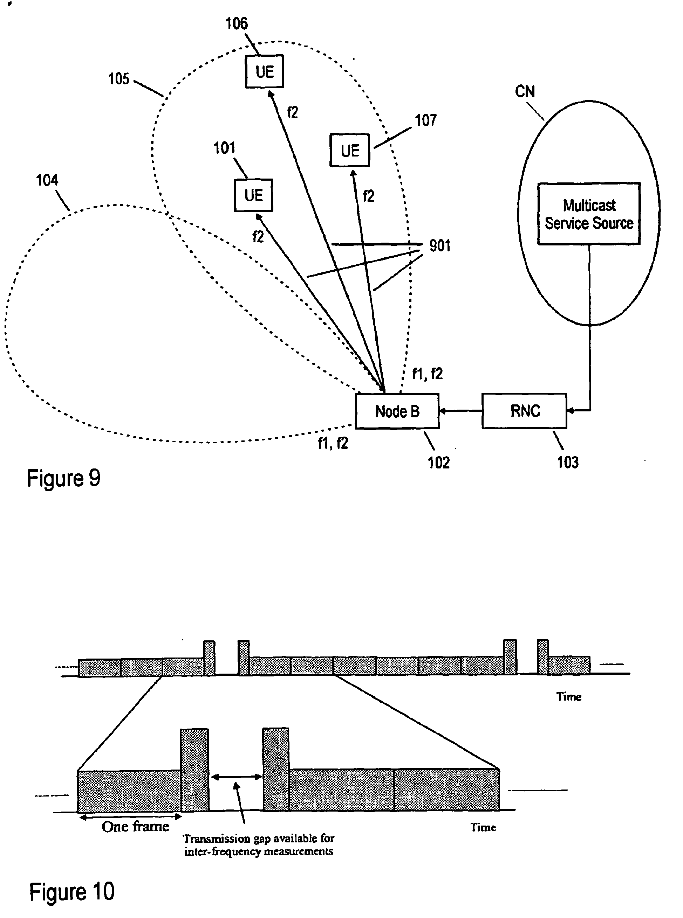

Figure 10 shows the transmission of a physical channel on the frame level in the compressed measurement mode where the decrease of the spreading factor is compensated by increasing the transmission power in the frame. Figure 11 illustrates the transmission of a physical channel on the frame level in the compressed mode where transmission gaps are realized by higher layer scheduling.

On command from the UTRAN, a UE monitors cells on other frequencies and cells on other modes and radio access technologies that are supported by the UE. To allow the UE to perform inter-frequency measurements, the UTRAN instructs the UE to enters into "compressed mode" for inter-frequency measurements.

MBMS supports the mobility between the cells controlled by different base stations (Node Bs). If there is more than one W-CDMA carrier per base station, these are usually used for balancing load or improving coverage. It is clear that MBMS content does not have to be transmitted on the same carriers in geographically neighboring cells. Due to mobility of users between cells controlled by different Node Bs, it may happen that there are sets of users belonging to the same MBMS group but receiving MBMS contents through different frequency carriers. For the sake of radio efficiency, it is therefore desirable to transmit MBMS content on a single W-CDMA carrier. Thus, the RAN may wish to move all users belonging to a same MBMS group to a single frequency carrier.

For this decision to be more accurate, a mechanism for inter-frequency measurements is needed.

EP 0 892 571 A relates to a mobile communication system, wherein a mobile station can request an idle time from a network, which may be used for measuring the strengths of signals from other base stations. In order to allow the mobile terminal to perform measurements, it is proposes to perform so-called "burst stealing", wherein "stealing a burst" means that a certain burst is left unreceived and instead of burst reception, desired neighbor cell base station measurements is carried out.

WO 03/005761 A1 provides a method for handing of streaming media sessions between wireless base stations in a mobile streaming media system. The teaching of this document aims to increase reliability and efficiency for streaming media to fixed or mobile clients. Two key assumptions are made by this document: the use of multiple self-decodable data streams delivered via different base stations to a mobile terminal and the use of Multiple Description Coding (MDC).

WO 01/65855 A2 provides a method and apparatus for streaming scalable video over a variable-bandwidth network such a packet based one. The number of bit (for FGS) or sub-layers (for discrete multi-layer scalability) is chosen to be transmitted for each enhancement layer frame. Further, these bits or sub-layers are also partitioned over multiple packets if being sent over a packet-based network. A windowing function is used to smooth the variation in the number of bits or sub-layers transmitted for each frame in situations where the network bandwidth is varying.

It is the object of the present invention to define a transmission format for scalable service provision that would enable a user terminal to carry out inter-frequency measurements without additional significant requirements on processing time.

The object of the invention is solved by the independent claims. Further embodiments are subject matter to their dependent claims.

To solve the above stated object the present invention provides a communication method in a wireless system comprising a radio access network and a plurality of mobile terminals. The radio access network notifies a mobile terminal to perform inter-frequency measurements. Further it transmits transmission data of the scalable data service to the mobile terminal, wherein the transmission data comprises a plurality of importance layers.

Moreover the radio access network schedules the importance layers of the transmission data, wherein the scheduling comprises selecting a subset of the plurality of importance layers for transmission to reduce the time to process transmission data of a scalable data service at the mobile terminal. By performing this type of scheduling, the effective data ate of the transmission data may be reduced at the radio access network prior to transmission, which reduces the amount of data the mobile terminal has to process and hereby enables the mobile terminal to perform inter-frequency measurements.

Advantageously, the transmission data of the scalable data service may be scheduled if a dedicated transport channel is used for their transmission. This embodiment of the invention relates to the provision of multicast service via dedicated transport channels. In this embodiment, the reduction of the quality of service in the multicast stream to the mobile terminal due to the scheduling of importance layers will not effect other users receiving the same multicast service as dedicated transport channels are used to transmit the service data.

Further, a control entity of the scalable data service may be notified to perform scheduling of the transmission data. E.g. the radio resource control in the radio network controller of the RAN may notify a control entity on the medium access control layer to start or stop scheduling the importance layers of the transmission data.

More particular, a radio resource control entity of the radio access network may notify a medium access control entity of the scalable data service to perform scheduling of the transmission data in order to control the scheduling of the transmission data of the scalable data service.

If the radio resource control entity and the medium access control entity for controlling the scalable data service are located in the same network element, indication primitives may be used to exchange data between these two entities. For the definitions of indication primitives it is referred to the document 3GPP TS 25.301 "Radio Interface Protocol Architecture".

In case the radio resource control entity and the medium access control entity to control the scalable data service are not located in the same network element, i.e. are not collocated, the radio resource control entity of the radio access network may transmit a notification to the control entity of the scalable data service using inter-network-element interface signaling. Inter-network-element interface signaling may be a wired interface signaling e.g. lub/lur interface signaling.

Using the indication primitives or lur/lub signaling, the control entity of the scalable data service e.g. on the MAC level, may receive scheduling information about the importance layers that may be scheduled when performing the inter-frequency measurements. Thereby, flexible scheduling may be provided in the system.

To allow the controlling of the control entity of the transmission data, the notification of the control entity may comprise scheduling information that may be used for the selection of the subset of importance layers to be scheduled by the control entity.

The importance layers of the transmission data may comprise a base layer providing basic quality of service and at least one enhanced layer for enhancing the quality of service.

Further, the radio access network may multiplex the transmission data provided to the mobile terminal from the radio access network to map them on the physical channel(s).

After the mobile terminal has performed its inter-frequency measurements, it may report the results to the radio access network for further processing. The radio access network receives the system-specific indicators derived from the inter-frequency measurement results from the mobile terminal and may take further actions such as initiating a frequency-cell change based on the measurement results. The indicators are predefined data structures that may be used to report the inter-frequency measurement results to the RAN. The indicators are usually defined by means of lookup tables describing mapping of certain ranges of measurement results to a particular type of indicator.

In this process the radio access network may decide whether to assign a new frequency to the mobile terminal for the transmission of the scalable service data based on the received measurement indicators, and assign the new frequency for data transmission to the mobile terminal if the RAN decided to assign the new frequency.

It is of further advantage, if the data transmitted to the mobile terminal in the step of notifying comprises information on the transmission format used by the radio access network for the transmission of the data of the scalable data service. This allows a flexible transmission format to be used in the communication system which may be adopted to the present demands and needs of the RAN and mobile terminal when performing the inter-frequency measurements.

The information may thereby indicate a temporal position of a transmission gap within a transmission frame, a duration of the transmission gap and the number of consecutive transmission gaps.

The temporal position of a transmission gap within a transmission frame, the duration of the transmission gap and the number of consecutive transmission gaps defines the transmission format used by the RAN for transmitting the scalable service data and the three parameters allow the flexible definition of the format used for data transmissions. Further, the transmission format may comprise information on the used modulation scheme, interleaving pattern; coding scheme, etc. used by the RAN.

The data transmitted from the radio access network to the mobile terminal when notifying the terminal to perform inter-frequency measurements may be transmitted using a control channel of the scalable data service or a notification control channel.

To further reduce the data rate of the transmission data of the scalable service, i.e. the time to process transmission data of a scalable data service at the mobile terminal, the transmission data of the scalable data service may be punctured in the RAN prior to transmission. Puncturing may be applied before mapping the transmission data on the physical channels.

Puncturing employs so called puncturing patterns which indicate bits in a data stream that are erased prior to transmission. Usually this technique is used to match the number of bits in a frame to radio interface transmission capabilities. The original data stream can be reconstructed from the bits of received signals as the location of the erased bits in each received signal is known to the receiver.

Another possibility to reduce the data rate on the downlink may be to reduce the spreading factor of the spreading code used to spread the transmission data of the scalable data service.

The scalable data service may be a multimedia broadcast/multicast service (MBMS). Further, the scalable data service may comprise multicast and/or broadcast data transmissions, i.e. the scalable service may be a broadcast or multicast service in the system.

Multiplexing the transmission data on the physical channel may be any known type of multiplexing, e.g. time multiplexing, orthogonal code multiplexing or orthogonal frequency division multiplex (OFDM) sub-carrier multiplexing.

Further, the present invention relates to a radio access network in a wireless system connectable to a plurality of mobile terminals. The radio access network comprises notification means for notifying a mobile terminal to perform inter-frequency measurements, transmission means for transmitting transmission data of the scalable data service to the mobile terminal, wherein the transmission data comprises a plurality of importance layers, and scheduling means for scheduling the importance layers of the transmission data, wherein the scheduling comprises selecting a subset of the plurality of importance layers for transmission.

The scheduling means may be adapted to schedule the transmission data of the scalable data service if a dedicated transport channel is used for their transmission.

In the radio access network, the notification means may be adapted to notify a control means of the scalable data service to perform scheduling of the transmission data.

The radio access network may further comprise a radio resource control entity for notifying a medium access control means of the scalable data service to perform scheduling of the transmission data. This is especially applicable if the control means of the scalable data service and the radio resource control entity reside in the same network element. Generally, it is noted that the radio resource control is not limited to its notification functionality.

In case these two entities do not reside in the same network element, the notification means may comprise a radio resource control entity for transmitting a notification to the control means of the scalable data service using lur/lub interface signaling.

The notification means may be adapted to transmit scheduling information for the selection of the subset of importance layers to the mobile terminal to allow the radio access network to control or influence the scheduling of transmission data.

Further, the importance layers of the transmission data may comprise a base layer providing basic quality of service and at least one enhanced layer for enhancing the quality of service.

The radio access network may further comprise multiplexing means for multiplexing the transmission data provided to the mobile terminal to the physical channels.

The radio access network may further comprise receiving means for receiving inter-frequency measurement results from the mobile terminal.

To process and act upon the measurement results received the radio access network may further comprise decision means for deciding whether to assign a new frequency to the mobile terminal for the transmission of the scalable data service data based on the received measurement results, and assigning means for assigning the new frequency for data transmission to the mobile terminal, if it is decided to assign the new frequency.

In case it should be necessary that the scheduling and multiplexing could not sufficiently decrease the transmission data rate of the scalable service to allow the mobile terminal to perform inter-frequency measurements, the radio access network may comprise puncturing means for puncturing the transmission data of the scalable service.

Another possibility to solve the above problem is to include spreading means in the radio access network for spreading the transmission data of the scalable data service, wherein the spreading means is adapted to vary the spreading factor of the spreading code.

Additionally, the present invention provides to a communication system comprising a radio access network as described above and at least one mobile terminal performing a transmission/reception of scalable service data.

In the following the present invention is described in more detail in reference to the attached figures and drawings showing advantageous embodiments of the invention. Similar or corresponding details in the figures are marked with the same reference numerals.
- **Figure 1**: shows a radio access network, wherein a mobile terminal joins a multicast group,
- **Figure 2**: shows the radio access network, wherein scalable service data are provided from the core network to the mobile terminal via the radio access network,
- **Figure 3**: shows the radio access network, wherein the mobile terminal joins a new cell and receives the scalable service data from the core network,
- **Figure 4**: shows the radio access network's internal signaling and the notification of the mobile terminal to perform inter-frequency measurements after joining a new cell of the radio access network,
- **Figure 5**: shows the radio access network's signaling to an radio network controller in a second radio access network and the notification of the mobile terminal to perform inter-frequency measurements after joining a new cell of the radio access network,
- **Figure 6**: shows the radio access network, wherein the mobile terminal performs inter-frequency measurements and reports on a decreased quality of service of the scalable data service to a charging entity in the radio access network,
- **Figure 7**: shows the radio access network, wherein the mobile terminal reports the measurement results to the radio access network,
- **Figure 8**: shows the radio access network assigning a new transmission frequency to the mobile terminal for the reception of the scalable service data, and
- **Figure 9**: shows the radio access network, wherein the mobile terminal receives the scalable service data at the assigned reception frequency.
- **Figure 10**: shows a compressed mode data transmission by reducing the spreading factor, and
- **Figure 11**: shows a compressed mode data transmission by higher layer scheduling.
- **Figure 12**: shows an example of a scalable MBMS transmission, and
- **Figure 13**: shows the multiplexing of importance layers of the transmission data on physical channels.

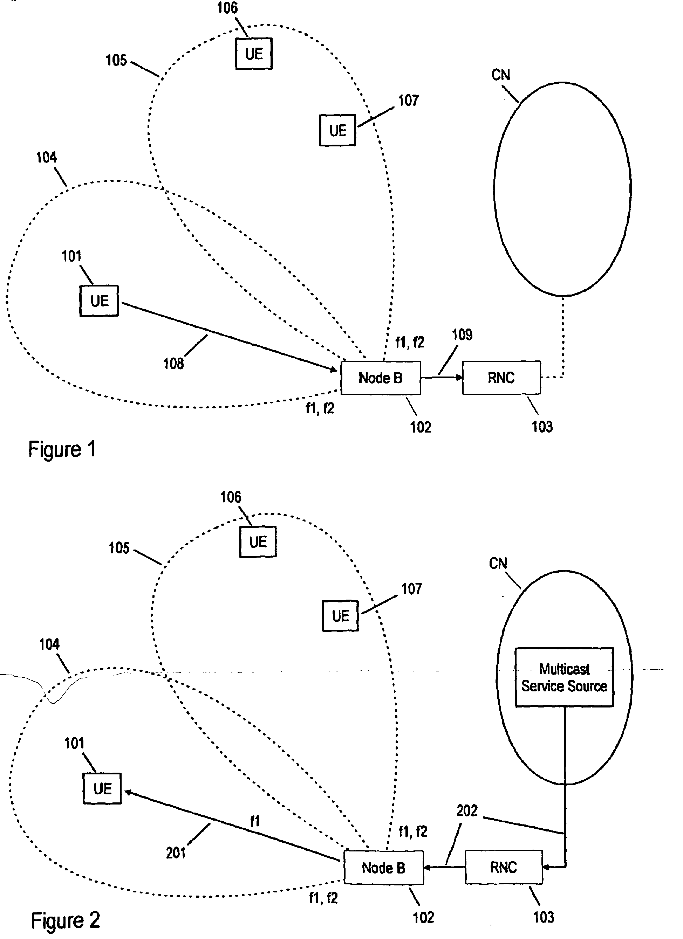

Figures 1 through Figure 9 are intended to exemplify a scenario for an inter-frequency cell change of a mobile terminal (UE 101).

Figure 1 shows a radio access network (RAN) comprising a Node B 102 and a radio network controller (RNC) 103. In general, RNC 103 may implement the medium access control (MAC) entity, the radio link control (RLC) entity, radio resource control (RRC) entity, broadcast/multicast control (BMC) entity and the packet data convergence protocol (PDCP) in the RAN. The RRC of the RNC is responsible for handovers between different carrier frequencies.

The RNC 103 may be further connected to the core network CN. In this illustrative example it is further assumed that in each cell 104, 105 of the Node B 102 the two W-CDMA carrier frequencies f1 and f2 are employed for transmission. It is clear that other access schemes may be also employed.

The user equipments 101, 106, 107 in source cell 104 and target cell 105 participate in a scalable data service, such as scalable MBMS. Though the figures show that the source cell 104 and target cell 105 are under control of the same Node B 102, it is pointed out that the cells may be also controlled by two different Node Bs. In the example of an inter-frequency cell change of UE 101 as shown in the figures, it is should be noted that the carrier frequency in the source cell 104 (source frequency) and the carrier frequency in the target cell 105 (target frequency) play a major role and not the entity controlling the cells.

Transmissions of the service data may be performed on a point-to-point basis for multicast transmissions using a dedicated transport channel or on a point-to-multipoint basis for broadcast transmissions using a common transport channel.

The UEs 106 and 107 reside in target cell 105 and receive scalable service data (MBMS data) at carrier frequency f2. The UE 101 resides in source cell 104 and joint a multicast group of an MBMS service by sending an appropriate registration message to a registration entity in the RAN. In this example, it is assumed to be located in the RNC 103. Arrows 108 and 109 illustrate the signaling to join the multicast service. Further, an MBMS content at the controlling RNC 103 is updated to include the identification of UE 101. This step enables the RNC to distribute multicast data delivered to the subscribed user equipments (101, 106, 107).

After a successful subscription, the UE 101 receives the transmission data of the scalable data service, i.e. the multicast service from a sending source. The sending source may be located within the core network CN as illustrated in Figure 2 or in a PLMN to which the core network CN may be further attached.

Figure 2 illustrates the data delivery of the multicast service (201, 202) to the UE 101. As indicated, the RAN employs the carrier frequency f1 for transmitting the transmission data from the Node B 102 to the UE 101.

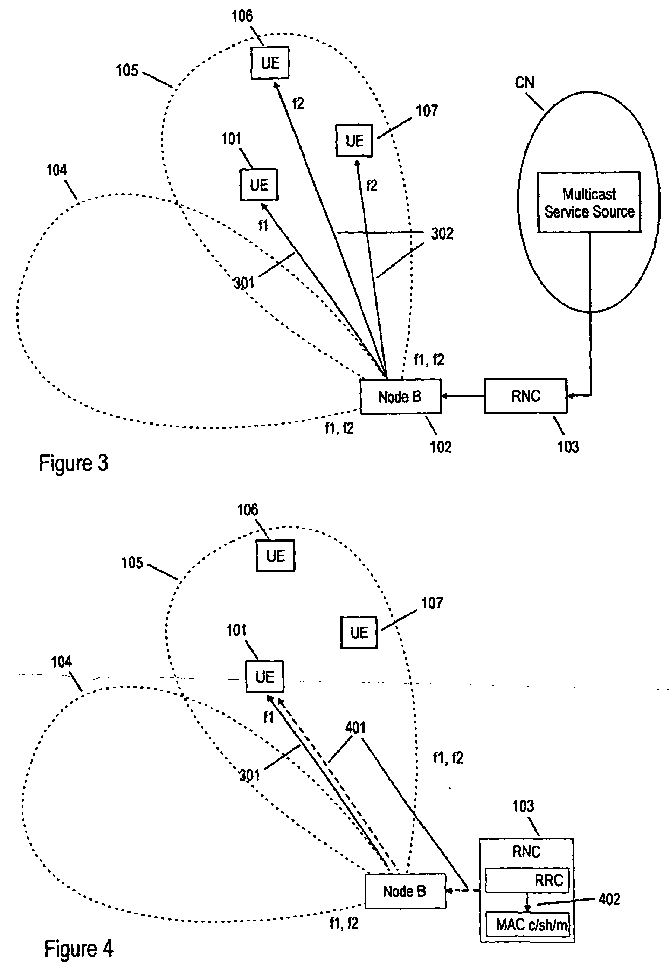

In Figure 3, UE 101 has moved from the source cell 104 to the target cell 105, i.e. a cell change has been performed. After moving from source cell 104 to target cell 105, the UE 101 still receives (301) the multicast data at the carrier frequency f1.

The other UEs 106 and 107 located in the target cell 105, which have also subscribed to the multicast service of UE 101, receive the transmission data of the multicast service at carrier frequency f2.

The RNC 103 may inform UE 101 about the structure of scalable data transmissions and announces available scalable MBMS services available in the target cell 105 via the MCCH or NCCH or another control channel. Further, the UE 101 may be notified by the RNC 103 about the type of channels used for delivering MBMS or scalable services within target cell 105. Common traffic channels may be used for broadcast transmissions and dedicated channels or common traffic channels may be used for multicast transmissions.

As mentioned earlier, the transmission of scalable service data as MBMS service data consumes most of the sector's total available transmission power on a carrier frequency. However, UEs 101, 106, 107 receiving the same MBMS service do not necessarily use the same carrier frequency within a cell, as illustrated in Figure 3. Hence, the RAN may wish to move all UEs 101, 106, 107 to a single carrier frequency.

Figure 4 shows the radio access network transmitting a notification to the mobile terminal 101 in order to instruct the UE 101 to perform inter-frequency measurements after joining the target 105 cell of the radio access network. Based on the results of these measurements, the RAN will decide whether the UE 101 should be moved to carrier frequency f2 for a further reception of the multicast service. The RNC 103 may send (401) a notification message via Node B 102 to the UE 101. This message instructs the mobile terminal 101 to perform inter-frequency measurement.

The measurement relies on the quantities obtained from observing the common pilot channel (CPICH). So far, three types of quantities have been defined for the measurement procedure (see, e.g. 3GPP TS 25.215, "Physical Layer - Measurements (FDD)") :
- Received Signal Code Power (RSCP), which is the received power on one code after dispreading, defined on the pilot symbols.
- Received Signal Strength Indicator (RSSI), which is the wideband received power within the channel bandwidth.
- Ec/No, defined as the received signal code power divided by the total received power in the channel bandwidth, i.e. RSCP/RSSI.

In Figure 4, it is assumed that the entity controlling the transmission of the multicast data to the UEs may e.g. be the MAC c/sh/m entity in the RNC 103 . Hence, the control entity of the multicast data transmission is located at the same network element as the RRC entity, which is controlling the assignment of carrier frequencies to the UE 101 and managing radio resources in the RAN. Therefore, the indication primitives may be used to exchange data between the RRC entity and the MAC c/sh/m entity controlling the multicast data transmission.

The RAN may relieve the UE 101 from the "normal" processing load resulting from the reception and processing of the multicast data received at the UE 101 in order to facilitate the inter-frequency measurements in the UE 101. As will be described in further down below, the RRC entity may e.g. instruct the control entity of the multicast service to schedule the transmission data of the multicast service such that their multiplexing on the physical channels will provide a transmission format with transmission gaps in between the frames (see e.g. Figures 10 and 11). These transmission gaps may be used by the UE 101 to perform the inter-frequency measurements in those time intervals. This method of measuring in time intervals given by transmission gaps in the transmission format is also referred to as compressed mode measurements.

Hence, in the present example the RRC of the RNC 103 may instruct the MAC c/sh/m entity to start and/or stop scheduling the multicast data to be transmitted to the UE 101 using indication primitives, in order to allow the UE 101 to perform the requested inter-frequency measurements. Consequently, the RAN provides the possibility of decreasing the necessary processing time for the UE 101 by introducing a transmission format for scalable service data with gaps in the frame structure allowing the UE 101 to perform the inter-frequency measurements.

In more detail the transmitted multicast data may be separated into different distinct importance layers which can be separately transmitted or processed as described earlier. In this case it is of advantage, if the scheduling entity schedules the transmitted data of the scalable service by selecting a base layer and possibly additional enhanced layers (depending on available system resources as bandwidth) for transmission to the UE 101.

It would be also possible that the signaling from the RRC to the control entity of the scalable data service to start scheduling may include information that allow the control entity to base the decision which layers of the multicast data to transmit or schedule on the signaling. Another possibility would be that the RRC directly instructs the control entity which importance layers should be scheduled and transmitted when the UE 101 has been instructed to perform the inter-frequency measurements. During "normal" operation all importance layers, i.e. the base layer and all enhanced layers may be transmitted.

The notification 401 sent from the RRC of the RNC 103 to the UE 101 when instructing UE 101 to perform inter-frequency measurements may include information about the temporal position of a transmission gap within a frame, duration of the transmission gap and the number of consecutive transmission gaps for the measurement procedure. Hence, the parameters transmitted may relate to the transmission format of the scalable service data which has been scheduled by the control entity of the scalable data service, i.e. the multicast service. This allows the usage of a flexible transmission format on the physical channels delivering the transmission data. The transmission format may easily adopt to current needs on processing time of UE 101 for inter-frequency measurements, i.e. allows to flexibly introduce transmission gaps into the data on the physical channels providing processing free time to the UE 101. Additionally, information on the used modulation scheme, coding scheme and/or the used interleaving pattern may be communicated to the UE 101.

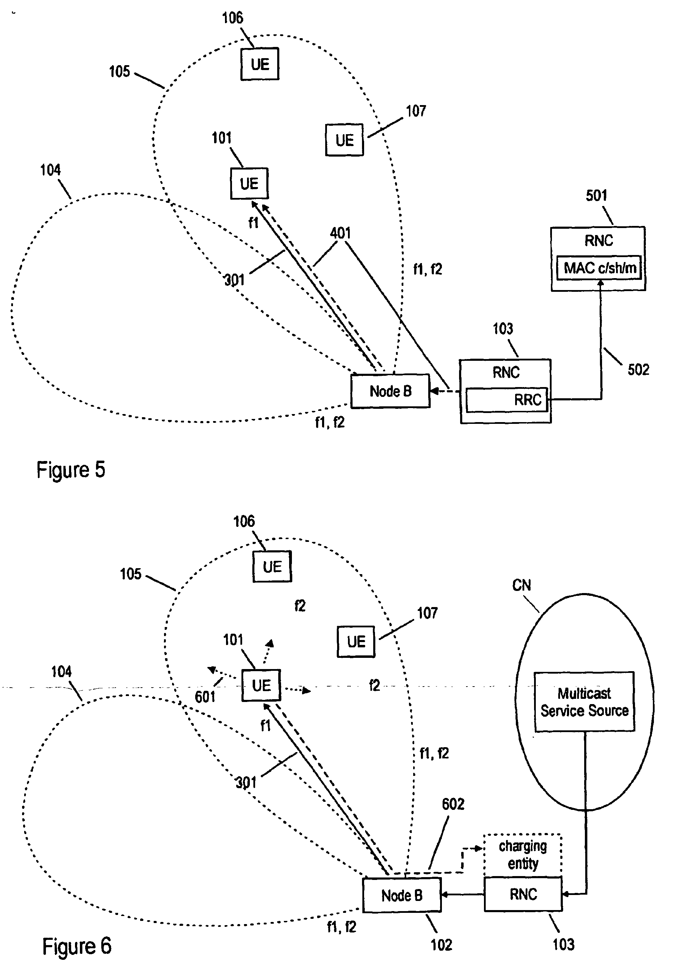

As Figure 4, Figure 5 also shows the radio access network transmitting a notification to the UE 101, in order to instruct the UE 101 to perform inter-frequency measurements after joining the target cell 105 of the radio access network. The RRC entity of the RNC 103 and the control entity of the multicast service (MAC c/sh/m) of RNC 501 are not located in the same network element. In order to perform the above described signaling between RRC and MAC c/sh/m to initiate or stop scheduling the transmission data of the multicast service, lub/lur signaling 502 may be employed.

As explained above, in case MAC c/sh/m and RRC entities are collocated, a simple indication primitive or reference may be used to transmit the scheduling information to the UE 101. If the MAC c/sh/m entity were located in Node B, additional lub/lur interface signaling would have to be defined. This means that some changes in the application protocols (RNSAP on the lur interface and NBAP on the lub interface) would have to be made.

Referring now to Figure 6, the UE 101 may now perform inter-frequency measurements 601 in the time intervals of the gaps in the transmission format of the multicast data delivered from the RAN.

As multicast services are often charged based on the delivered quality of service, it may be desirable that the UE 101 informs 602 a charging entity about the degraded quality of service during the time interval in which the inter-frequency measurements are performed. The delivered quality of service may be reduced, as the control entity responsible for scheduling the multicast data may not schedule all importance layers belonging to a certain quality of service level for transmission when the UE 101 is performing the inter-frequency measurements.

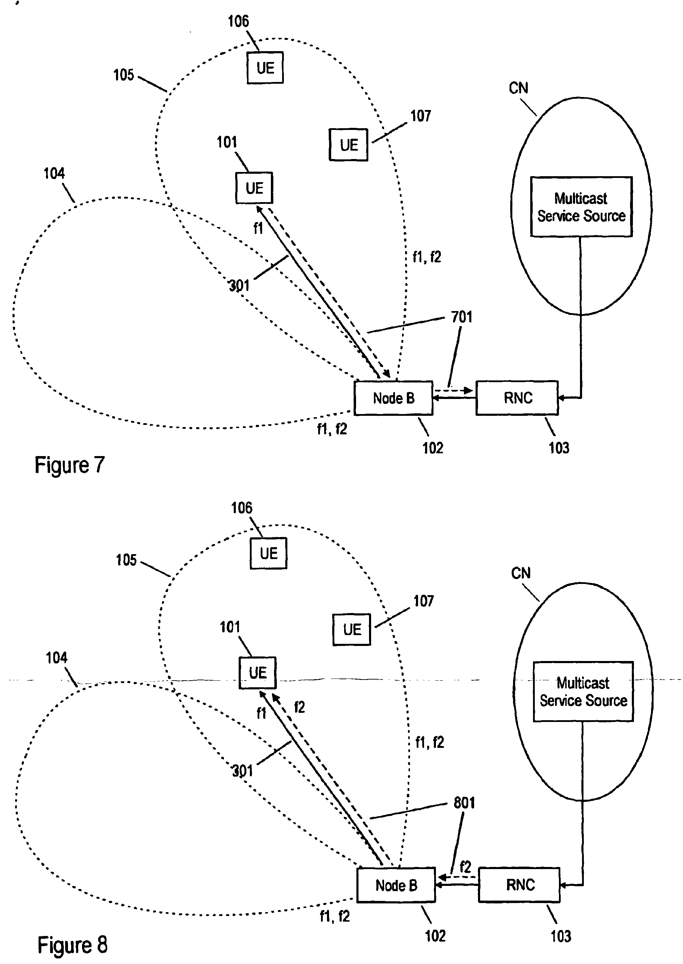

When the UE 101 has finished the inter-frequency measurements, it may report 701 the results to the RAN as illustrated in Figure 7. The UE 101 may inform the RAN about the measurement results directly, by sending the results themselves or may use special indicators which inform the RAN about whether certain quality criteria are fulfilled or not. When receiving the measurement results, the RAN may decide whether certain quality criteria are fulfilled which allow the RAN to move the UE 101 to another carrier frequency for receiving the multicast data.

In case indicators for reporting the inter-frequency measurement results are used by UE 101, the RAN may decide directly from the signaled information on whether to initiate a cell change of the UE 101. The quality criteria are based on the inter-frequency measurements carried out by the UE 101, i.e. the measurement result values as outlined above.

If the quality criteria are fulfilled and the RNC 103 decides to move UE 101 to another carrier frequency for the reception/transmission of multicast data, the RNC 103 informs the UE 101 to switch 801 to the new carrier frequency f2. This process is illustrated in Figure 8.

Finally, as shown in Figure 9, the UE 101 receives the scalable service data at the new carrier frequency f2, which is used by all UEs in the target cell 105 to receive the multicast service. Hence, by the communication method described above, the present invention allows the RAN to move all UE 101, 106, 107 that receive a scalable data service to a single carrier frequency 102. Inter-frequency handover is generally used to perform load balancing between different carriers. For multicast / broadcast type of services, it may be desirable to have the transmission on a single carrier. In this case , the radio efficiency of the system can be significantly increased, as the available transmission power within a cell does not have to be used for the transmission on two different frequencies.

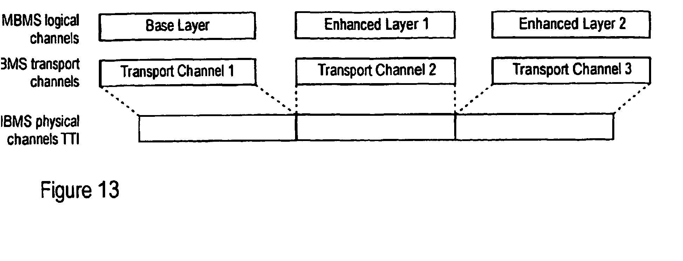

In the following paragraphs the scheduling of the transmission data of the scalable data service is described in more detail. As outlined above an entity controlling the scheduling of the transmission data - such as the MAC c/sh/m entity - may reduce the data rate of the transmission data transmitted to the UE 101 by selecting and scheduling only a subset of the importance layers for transmission. Figure 13 illustrates a multicast data stream with three different importance layers: the base layer, enhanced layers 1 and enhanced layer 2. Usually the MAC c/sh/m entity would schedule all layers for transmission, such that all importance layers would be assigned to transport channels and which are multiplexed to the physical channels carrying the transmission data.

In case the UE 101 has been instructed to perform inter-frequency measurements, the MAC c/sh/m entity is informed or instructed to start scheduling the transmission data in order to reduce the data rate to the UE 101, which relieves the processing load at the UE 101 (see also Figures 4 and 5). In this case, the MAC c/sh/m may decide to only transmit the base layer and the enhanced layer 1 to the UE 101, as long as the terminal performs the measurements. Hence, a transmission format as illustrated in Figure 11 may be the result of multiplexing the data on the physical channels, i.e. the transmission gap is located at positions at which the data of enhanced layer 2 would usually have been transmitted.

However, the number of slots that are used for transmission of a single importance layer may be different from the amount of time that is needed for inter-frequency measurements.

Hence, for example in case the number of slots required for inter-frequency measurements by UE 101 corresponds to the number of slots that would have been allocated to enhanced layer 1 and enhanced layer 2, the necessary time interval for performing the measurements may be provides by simple not transmitting enhanced layer 1 and enhanced layer 2. In this case only the base layer would be scheduled for MBMS transmission by the MAC c/sh/m. The indication primitive from RRC to corresponding control entity for scheduling the MBMS transmission may contain information on importance layers that can be scheduled during compressed mode measurement procedure.

If the measurement period is not equal to the number of slots that can be made available by scheduling a reduced number of importance layers, other compression approaches as may be applied before such scheduling to achieve a good fit. As mentioned earlier, increasing the available data rate by reducing the spreading factor may be used to further increase the transmission gap in the transmission format on the physical channels (see Figure 10). However, the decrease of spreading factor may have to be compensated by increasing transmission power in the frame. A further possibility is to reduce the data rate by puncturing on physical layer.

Consequently, the different possibilities for frame compression when performing compressed mode measurements may be combined adequately to provide the processing free time necessary to UE 101 for inter-frequency measurements.

The basic principles of interfrequency measurements for scalable MBMS have been explained in this report relying on general MBMS principles. It should be clear to those skilled in the art that the exposed principles can be applied in a straightforward manner to different architectures and channels of MBMS or other services allowing a scalable transmission of their service data.

As hinted in the previous section, MAC c/sh/m entity in RNC may not be primarily responsible for scheduling scalable MBMS transmissions. Another functional entity may be defined and it may be located in the same or different network element (Node B). As outlined above it is important to recognize that, in this case, lub / lur interface signalling should be used instead of MAC c/sh/m indication primitives.

The transmission format in this description is especially suited for time multiplexing of importance layers on WCDMA radio interface. It should be clear to those skilled in the art that the idea is generally applicable to different types of multiplexing, e.g. code multiplexing for WCDMA radio interface or sub-carrier-wise multiplexing for OFDM radio interface.

## Claims

1. A communication method in a wireless system comprising a radio access network and a plurality of mobile terminal (101, 106) the method comprising the following steps performed by the radio access network:
notifying a mobile terminal (101) to perform inter-frequency measurements (401),
transmitting transmission data of a scalable data service to the mobile terminal, wherein the transmission data comprises a plurality of distinct layer data streams,
selecting a subset of the plurality of distinct layer data streams, and
scheduling the selected distinct layer data streams for transmission to enable the mobile terminal to perform inter-frequency measurements.

2. The communication method according to claim 1, wherein the transmission data of the scalable data service are scheduled, if a dedicated transport channel is used for their transmission.

3. The communication method according to claim 1 or 2, further comprising the step of notifying a control entity of the scalable data service to perform scheduling of the transmission data.

4. The communication method according to claim 3, wherein in the step of notifying the control entity, a radio resource control entity of the radio access network notifies a medium access control entity of the scalable data service to perform scheduling of the transmission data using at least one indication primitive.

5. The communication method according to claim 3, wherein in the step of notifying the control entity, a radio resource control entity of the radio access network transmits a notification to the control entity of the scalable data service using inter-network-element interface signaling, in case the radio resource control entity and the control entity are not collocated.

6. The communication method according to one of claims 3 to 5, wherein the step of notifying the control entity comprises transmitting scheduling information for the selection of the subset of distinct layer data streams to be scheduled.

7. The communication method according to one of claims 1 to 6, wherein the distinct layer data streams of the transmission data comprise a base layer providing basic quality of service and at least one enhanced layer for enhancing the quality of service.

8. The communication method according to one of claims 1 to 7, further comprising the step of multiplexing on the physical channel the transmission data provided to the mobile terminal from the radio access network.

9. The communication method according to claim 8, wherein multiplexing is either time multiplexing, code multiplexing or OFDM sub-carrier multiplexing on the physical channel.

10. The communication method according to one of claims 1 to 9, further comprising the step of receiving indicators derived from the inter-frequency measurement results from the mobile terminal.

11. The communication method according to claim 10, further comprising the steps of:
deciding whether to assign a new frequency to the mobile terminal for the transmission of the scalable service data based on the received measurement indicators, and
assigning the new frequency for data transmission to the mobile terminal if it is decided to assign the new frequency.

12. The communication method according to one of claims 1 to 11, wherein the data transmitted to the mobile terminal in the step of notifying comprises information on the transmission format used by the radio access network for the transmission of the data of the scalable data service.

13. The communication method according to claim 12, wherein the information in the transmission format indicates a temporal position of a transmission gap within a transmission frame, a duration of the transmission gap and/or the number of consecutive transmission gaps in the transmission format.

14. The communication method according to claim 12 or 13, wherein the data transmitted to the mobile terminal in the step of notifying is transmitted using an MBMS control channel or a notification control channel.

15. The communication method according to one of claims 1 to 14, further comprises the step of puncturing the transmission data of the scalable data service.

16. The communication method according to one of claims 1 to 15, further comprises the step of reducing the spreading factor of the spreading code used to spread the transmission data of the scalable data service.

17. The communication method according to one of claims 1 to 16, wherein the scalable data service is a multimedia broadcast/multicast service MBMS.

18. The communication method according to one of claims 1 to 17 wherein the scalable data service comprises multicast and/or broadcast data transmissions.

19. A radio access network in a wireless system connectable to a plurality of mobile terminals (101,106), wherein the radio access network comprises:
notification means for notifying a mobile terminal (101) to perform inter-frequency measurements (401),
transmission means for transmitting transmission data of a scalable data service to the mobile terminal, wherein the transmission data comprises a plurality of distinct layer data streams, and
scheduling means for scheduling a subset of the distinct layer data streams of the transmission data to enable the mobile terminal to perform inter-frequency measurements,
wherein the scheduling means is adapted to select said subset of the plurality of distinct layer data streams for transmission.

20. The radio access network according to claim 19, wherein the scheduling means is adapted to schedule the transmission data of the scalable data service, if a dedicated transport channel is used for their transmission.

21. The radio access network according to claim 19 or 20, the notification means is further adapted to notify a control means of the scalable data service to perform scheduling of the transmission data.

22. The radio access network according to claim 21, further comprising a radio resource control entity for notifying a medium access control means of the scalable data service to perform scheduling of the transmission data using at least one indication primitive.

23. The radio access network according to claim 21,further comprising a radio resource control entity for transmitting a notification to the control means of the scalable data service using inter-network-element interface signaling, in case the radio resource control entity and the control entity are not collocated.

24. The radio access network according to one of claims 21 to 23, wherein in the radio resource control entity is adapted to transmit scheduling information for the selection of the subset of distinct layer data streams to the mobile terminal.

25. The radio access network according to one of claims 19 to 24, wherein the distinct layer data streams of the transmission data comprise a base layer providing basic quality of service and at least one enhanced layer for enhancing the quality of service.

26. The radio access network according to one of claims 19 to 25, further multiplexing means for multiplexing on the physical channel the transmission data provided to the mobile terminal.

27. The radio access network according to one of claims 19 to 26, further comprising receiving means for receiving indicators derived from the inter-frequency measurement results from the mobile terminal.

28. The radio access network according to one of claims 19 to 27, further comprising:
decision means for deciding whether to assign a new frequency to the mobile terminal for the transmission of the scalable data service data based on the received measurement indicators, and
assigning means for assigning the new frequency for data transmission to the mobile terminal if it is decided to assign the new frequency.

29. The radio access network according to one of claims 19 to 28, further comprising puncturing means for puncturing the transmission data of the scalable service.

30. The radio access network according to one of claims 19 to 29, further comprising spreading means for spreading the transmission data of the scalable data service, wherein the spreading means is adapted to vary the spreading factor of the spreading code.

31. A communication system comprising a radio access network according to one of claims 19 to 30 and at least one mobile terminal transmitting and/or receiving scalable service data.

## Patentansprüche

1. Kommunikationsverfahren in einem Drahtlos-System, das ein Funkzugangsnetzwerk und eine Vielzahl mobiler Endgeräte (101, 106) umfasst, wobei das Verfahren die folgenden Schritte umfasst, die durch das Funkzugangsnetzwerk durchgeführt werden:
Erteilen einer Anweisung an ein mobiles Endgerät (101), Zwischenfrequenz-Messungen durchzuführen (401),
Senden von Sendedaten eines skalierbaren Datendienstes zu dem mobilen Endgerät, wobei die Sendedaten eine Vielzahl von Datenströmen verschiedener Schichten umfassen,
Auswählen einer Teilgruppe der Vielzahl von Datenströmen verschiedener Schichten, und
Einplanung der ausgewählten Datenströme verschiedener Schichten zur Übertragung, um das mobile Endgerät in die Lage zu versetzen, Zwischenfrequenz-Messungen durchzuführen.

2. Kommunikationsverfahren nach Anspruch 1, wobei die Sendedaten des skalierbaren Datendienstes eingeplant werden, um sie zu senden, wenn ein zugewiesener Transportkanal verwendet wird.

3. Kommunikationsverfahren nach Anspruch 1 oder 2, das des Weiteren den Schritt umfasst, Anweisen einer Steuereinheit des skalierbaren Datendienstes eine Einplanung der Sendedaten durchzuführen.

4. Kommunikationsverfahren nach Anspruch 3, wobei in dem Schritt des Anweisens der Steuereinheit eine Radio-Resource Control-Einheit des Funkzugangsnetzwerkes eine Medium Access Control-Einheit des skalierbaren Datendienstes anweist, eine Einplanung der Sendedaten unter Verwendung eines Anzeige-Primitivs durchzuführen.

5. Kommunikationsverfahren nach Anspruch 3, wobei in dem Schritt des Anweisens der Steuereinheit eine Radio-Resource Control-Einheit des Funkzugangsnetzwerkes eine Anweisung an die Steuereinheit des skalierbaren Datendienstes unter Verwendung von Schnittstellensignalisierung zwischen Netzwerkelementen sendet, wenn die Radio-Resource Control-Einheit und die Steuereinheit nicht zusammen angeordnet sind.

6. Kommunikationsverfahren nach einem der Ansprüche 3 bis 5, wobei der Schritt des Anweisens der Steuereinheit das Senden von Planungsinformationen für die Auswahl der Teilgruppe von Datenströmen verschiedener Schichten umfasst, die eingeplant werden sollen.

7. Kommunikationsverfahren nach einem der Ansprüche 1 bis 6, wobei die Datenströme verschiedener Schichten der Sendedaten eine Basisschicht, die Basisqualität des Dienstes bereitstellt, und wenigstens eine verbesserte Schicht umfassen, die die Qualität des Dienstes verbessert.

8. Kommunikationsverfahren nach einem der Ansprüche 1 bis 7, das des Weiteren den Schritt des Multiplexens der dem mobilen Endgerät von dem Funkzugangsnetzwerk bereitgestellten Sendedaten auf dem physikalischen Kanal umfasst..

9. Kommunikationsverfahren nach Anspruch 8, wobei Multiplexen entweder Zeit-Multiplex, Code-Multiplex oder OFDM-Subcarrier-Multiplex auf dem physikalischen Kanal ist.

10. Kommunikationsverfahren nach einem der Ansprüche 1 bis 9, das des Weiteren den Schritt des Empfangens von Indikatoren von dem mobilen Endgerät, die aus den Zwischenfrequenz-Messergebnissen hergeleitet werden, umfasst.

11. Kommunikationsverfahren nach Anspruch 10, das des Weiteren die folgenden Schritte umfasst:
basierend auf den empfangenen Mess-Indikatoren Entscheiden, ob dem mobilen Endgerät für das Senden der skalierbaren Dienstdaten eine neue Frequenz zugewiesen wird, und
Zuweisen der neuen Frequenz an das mobile Endgerät für das Senden der Daten, wenn entschieden wird, dass eine neue Frequenz zugewiesen wird.

12. Kommunikationsverfahren nach einem der Ansprüche 1 bis 11, wobei die in dem Schritt des Anweisens zu dem mobilen Endgerät gesendeten Daten Informationen über das Sendeformat umfassen, das von dem Funkzugangsnetzwerk für das Senden der Daten des skalierbaren Datendienstes verwendet wird.

13. Kommunikationsverfahren nach Anspruch 12, wobei die Informationen über das Sendeformat eine zeitliche Position eines Sendespaltes in einem Senderahmen, eine Dauer des Sendespaltes und/oder die Anzahl aufeinander folgender Sendespalte in dem Sendeformat anzeigen.

14. Kommunikationsverfahren nach Anspruch 12 oder 13, wobei die zu dem mobilen Endgerät in dem Schritt des Anweisen gesendeten Daten unter Verwendung eines MBMS-Steuerkanals oder eines Anweisungs-Steuerkanals gesendet werden.

15. Kommunikationsverfahren nach einem der Ansprüche 1 bis 14, das des Weiteren den Schritt des Punktierens der Sendedaten des skalierbaren Datendienstes umfasst.

16. Kommunikationsverfahren nach einem der Ansprüche 1 bis 15, das des Weiteren den Schritt des Reduzierens des Spreizfaktors des Spreizcodes umfasst, der verwendet wird, um die Sendedaten des skalierbaren Datendienstes zu spreizen.

17. Kommunikationsverfahren nach einem der Ansprüche 1 bis 16, wobei der skalierbare Datendienst ein Multimedia-Broadcast-Multicast-Service (MBMS) ist.

18. Kommunikationsverfahren nach einem der Ansprüche 1 bis 17, wobei der skalierbare Datendienst Multicast- und/oder Broadcast-Datensendevorgänge umfasst.

19. Funkzugangs-Netzwerk in einem Drahtlossystem, das mit einer Vielzahl mobiler Endgeräte (101, 106) verbunden werden kann, wobei das Funkzugangs-Netzwerk umfasst:
eine Benachrichtigungseinrichtung, die ein mobiles Endgerät (101) anweist, Zwischenfrequenz-Messungen durchzuführen (401);
eine Sendeeinrichtung, die Sendedaten eines skalierbaren Datendienstes zu dem mobilen Endgerät sendet, wobei die Sendedaten eine Vielzahl von Datenströmen verschiedener Schichten umfassen, und
eine Einplanungseinrichtung, die eine Teilgruppe der Datenströme verschiedener Schichten der Sendedaten einplant, um das mobile Endgerät in die Lage zu versetzen, Zwischenfrequenz-Messungen durchzuführen,
wobei die Koordinierungseinrichtung so eingerichtet ist, dass sie die Teilgruppe der Vielzahl von Datenströmen verschiedener Schichten zum Senden auswählt.

20. Funkzugangs-Netzwerk nach Anspruch 19, wobei die Einplanuhgseinrichtung so eingerichtet ist, dass sie die Sendedaten des skalierbaren Datendienstes einplant, wenn ein zugewiesener Transportkanal verwendet wird, um sie zu senden.

21. Funkzugangs-Netzwerk nach Anspruch 19 oder 20, wobei die Benachrichtigungseinrichtung des Weiteren so eingerichtet ist, dass sie eine Steuereinrichtung des skalierbaren Datendienstes anweist, eine Einplanung der Sendedaten durchzuführen.

22. Funkzugangs-Netzwerk nach Anspruch 21, die des Weiteren eine Radio Resource Control-Einheit umfasst, die eine Medium Access Control-Einrichtung des skalierbaren Datendienstes anweist, eine Einplanung der Sendedaten unter Verwendung wenigstens eines Anzeige-Primitivs durchzuführen.

23. Funkzugangs-Netzwerk nach Anspruch 21, das des Weiteren eine Radio Resource Control-Einheit umfasst, die eine Benachrichtigung an die Steuereinrichtung des skalierbaren Datendienstes unter Verwendung von Schnittstellensignalisierung zwischen Netzwerkelementen sendet, wenn die Radio Resource Control-Einheit und die Steuereinheit nicht zusammen angeordnet sind.

24. Funkzugangs-Netzwerk nach einem der Ansprüche 21 bis 23, wobei die Radio Resource Control-Einheit so eingerichtet ist, dass sie Planungsinformationen für die Auswahl der Teilgruppe von Datenströmen verschiedener Schichten zu dem mobilen Endgerät sendet.

25. Funkzugangs-Netzwerk nach einem der Ansprüche 19 bis 24, wobei die Datenströme verschiedener Schichten der Sendedaten eine Basisschicht, die Basisqualität des Dienstes bereitstellt, und wenigstens eine verbesserte Schicht umfassen, die die Qualität des Dienstes verbessert.

26. Funkzugangs-Netzwerk nach einem der Ansprüche 19 bis 25, das des Weiteren eine Multiplexeinrichtung umfasst, die die dem mobilen Endgerät bereitgestellten Sendedaten auf dem physikalischen Kanal multiplext.

27. Funkzugangs-Netzwerk nach einem der Ansprüche 19 bis 26, das des Weiteren eine Empfangseinrichtung umfasst, die Indikatoren empfängt, die aus den Zwischenfrequenz-Messergebnissen von dem mobilen Endgerät hergeleitet werden.

28. Funkzugangs-Netzwerk nach einem der Ansprüche 19 bis 27, das des Weiteren umfasst:
eine Entscheidungseinrichtung, die auf Basis der empfangenen Mess-Indikatoren entscheidet, ob dem mobilen Endgerät für das Senden der Daten des skalierbaren Datendienstes eine neue Frequenz zugewiesen wird, und
eine Zuweisungseinrichtung, die dem mobilen Endgerät für das Datensenden die neue Frequenz zuweist, wenn entschieden wird, dass die neue Frequenz zugewiesen wird.

29. Funkzugangs-Netzwerk nach einem der Ansprüche 19 bis 28, die des Weiteren eine Punktiereinrichtung umfasst, die die Sendedaten des skalierbaren Dienstes punktiert.

30. Funkzugangs-Netzwerk nach einem der Ansprüche 19 bis 29, das des Weiteren eine Spreizeinrichtung umfasst, die die Sendedaten des skalierbaren Datendienstes spreizt, wobei die Spreizeinrichtung so eingerichtet ist, dass sie den Spreizfaktor des Spreizcodes ändert.

31. Kommunikationssystem, das ein Funkzugangs-Netzwerk nach einem der Ansprüche 19 bis 30 und wenigstens ein mobiles Endgerät umfasst, das skalierbare Dienstdaten sendet und/oder empfängt.

## Revendications

1. Procédé de communication dans un système sans fil comprenant un réseau d'accès radio et une pluralité de terminaux mobiles (101, 106), le procédé comprenant les étapes suivantes exécutées par le réseau d'accès radio :
notifier à un terminal mobile (101) d'exécuter des mesures d'inter-fréquences, (401)
émettre des données d'émission d'un service évolutif de données vers un terminal mobile, dans lequel les données d'émission comprennent une pluralité de flux de données de couches distinctes,
sélectionner un sous-ensemble de la pluralité de flux de données de couches distinctes, et
planifier les flux de données de couches distinctes sélectionnées pour émission afin de permettre terminal mobile d'exécuter les mesures d'interfréquence.

2. Procédé de communication selon la revendication 1, dans lequel les données d'émission du service évolutif de données sont planifiées, si une voie de transport dédiée est utilisée pour leur émission.

3. Procédé de communication selon la revendication 1 ou 2, comprenant en outre l'étape consistant à notifier à une entité de commande du service évolutif de données d'exécuter la planification des données d'émission.

4. Procédé de communication selon la revendication 3, dans lequel dans l'étape de notification de l'entité de commande, une entité de commande de ressources radio du réseau d'accès radio notifie à une entité de commande d'accès au support du service évolutif de données d'exécuter la planification des données d'émission en utilisant au moins une primitive d'indication.

5. Procédé de communication selon la revendication 3, dans lequel dans l'étape de notification de l'entité de commande, une entité de commande de ressources radio du réseau d'accès radio émet une notification vers l'entité de commande du service évolutif de données en utilisant une signalisation d'interface inter-réseau-élément, au cas où l'entité de commande de ressources radio et l'entité de commande ne seraient pas contigues.

6. Procédé de communication selon l'une des revendications 3 à 5, dans lequel l'étape de notification de l'entité de commande comprend l'opération consistant à émettre des informations de planification pour la sélection du sous-ensemble de flux de données de couches distinctes devant être planifié.

7. Procédé de communication selon l'une des revendications 1 à 6, dans lequel les flux de données de couches distinctes des données d'émission comprennent une couche de base assurant une qualité de service de base et au moins une couche améliorée pour améliorer la qualité de service.

8. Procédé de communication selon l'une des revendications 1 à 7, comprenant en outre l'étape consistant à multiplexer sur la voie physique les données d'émission délivrées au terminal mobile par le réseau d'accès radio.

9. Procédé de communication selon la revendication 8, dans lequel le multiplexage est soit un multiplexage temporel, soit un multiplexage par code, soit un multiplexage OFDM de sous-porteur sur la voie physique.

10. Procédé de communication selon l'une des revendications 1 à 9, comprenant en outre l'étape consistant à recevoir des indicateurs dérivés à partir des résultats de mesure d'interfréquence délivrés par le terminal mobile.

11. Procédé de communication selon la revendication 10, comprenant en outre les étapes consistant à :
décider d'attribuer ou non une nouvelle fréquence au terminal mobile pour l'émission des données de service évolutif en se basant sur les indicateurs de mesure reçus, et
attribuer la nouvelle fréquence pour l'émission de données vers le terminal mobile s'il est décidé d'attribuer la nouvelle fréquence.

12. Procédé de communication selon l'une des revendications 1 à 11, dans lequel les données émises vers le terminal mobile dans l'étape de notification comprennent des informations sur le format d'émission utilisé par le réseau d'accès radio pour l'émission des données du service évolutif de données.

13. Procédé de communication selon la revendication 12, dans lequel les informations dans le format d'émission indiquent une position temporelle d'un intervalle d'émission au sein de la trame d'émission, une durée de l'intervalle d'émission et/ou le nombre d'intervalles d'émission consécutifs dans le format d'émission.

14. Procédé de communication selon la revendication 12 ou 13, dans lequel les données émises vers le terminal mobile dans l'étape de notification sont émises en utilisant une voie de commande MEMS ou une voie de commande de notification.

15. Procédé de communication selon l'une des revendications 1 à 14, comprenant en outre l'étape consistant à perforer les données d'émission du service évolutif de données.

16. Procédé de communication selon l'une des revendications 1 à 15, comprenant en outre l'étape consistant à réduire le coefficient d'étalement du code d'étalement utilisé pour étaler les données d'émission du service évolutif de données.

17. Procédé de communication selon l'une des revendications 1 à 16, dans lequel le service évolutif de données est un service de diffusion/multidiffusion de contenus multimédias MBMS.

18. Procédé de communication selon l'une des revendications 1 à 17, dans lequel le service évolutif de données comprend des émissions de données multidiffusées et/ou diffusées.

19. Réseau d'accès radio dans un système sans fil connectable à une pluralité de terminaux mobiles (101, 106), dans lequel le réseau d'accès radio comprend :
un moyen de notification pour notifier à un terminal mobile (101) d'exécuter des mesures d'interfréquence, (401)
un moyen d'émission pour émettre des données d'émission d'un service évolutif de données vers un terminal mobile, dans lequel les données d'émission comprennent une pluralité de flux de données de couches distinctes,
un moyen de planification pour planifier un sous-ensemble des flux de données de couches distinctes des données d'émission afin de permettre au terminal mobile d'exécuter des mesures d'interfréquence, dans lequel
le moyen de planification est adapté à sélectionnner ledit sous-ensemble de la pluralité de flux de données de couches distinctes en vue de l'émission.

20. Réseau d'accès selon la revendication 19, dans lequel le moyen de planification est adapté à planifier les données d'émission du service évolutif de données, si une voie de transport dédiée est utilisée pour leur émission.

21. Réseau d'accès selon la revendication 19 ou 20, dans lequel le moyen de notification est en outre adapté à notifier au moyen de commande du service évolutif de données d'exécuter la planification des données d'émission.

22. Réseau d'accès selon la revendication 21, comprenant en outre une entité de commande de ressources radio pour notifier à un moyen de commande d'accès au support du service évolutif de données d'exécuter la planification des données d'émission en utilisant au moins une primitive d'indication.

23. Réseau d'accès selon la revendication 21, comprenant en outre une entité de commande de ressources radio pour émettre une notification vers le moyen de commande du service évolutif de données en utilisant une signalisation d'interface inter-réseau-élément, au cas où l'entité de commande de ressources radio et l'entité de commande ne seraient pas contigues.

24. Réseau d'accès selon l'une des revendications 21 à 23, dans lequel l'entité de commande de ressources radio est adapté à émettre des informations de planification pour la sélection du sous-ensemble de flux de données de couches distinctes vers le terminal mobile.

25. Réseau d'accès selon l'une des revendications 19 à 24, dans lequel les flux de données de couches distinctes des données d'émission comprennent une couche de base assurant une qualité de service de base et au moins une couche améliorée pour améliorer la qualité de service.

26. Réseau d'accès selon l'une des revendications 19 à 25, comprenant en outre un moyen de multiplexage pour multiplexer sur la voie physique les données d'émission délivrées au terminal mobile.

27. Réseau d'accès selon l'une des revendications 19 à 26, comprenant en outre un moyen de réception pour recevoir des indicateurs dérivés à partir des résultats de mesure d'interfréquence délivrés par le terminal mobile.

28. Réseau d'accès selon l'une des revendications 19 à 27, comprenant en outre :
un moyen de décision pour décider d'attribuer ou non une nouvelle fréquence au terminal mobile pour l'émission des données de service évolutif en se basant sur les indicateurs de mesure reçus, et
un moyen d'attribution pour attribuer la nouvelle fréquence pour l'émission de données vers le terminal mobile s'il est décidé d'attribuer la nouvelle fréquence.

29. Réseau d'accès selon l'une des revendications 19 à 28, comprenant en outre un moyen de perforation pour perforer les données d'émission du service évolutif.

30. Réseau d'accès selon l'une des revendications 19 à 29, comprenant en outre un moyen d'étalement pour étaler les données d'émission du service évolutif de données, dans lequel le moyen d'étalement est adapté à faire varier le coefficient d'étalement du code d'étalement.

31. Système de communication comprenant un réseau d'accès radio selon l'une des revendications 19 à 30 et au moins un terminal mobile émettant et/ou recevant des données de service évolutif.
